# NEUE EUROPÄISCHE PATENTSCHRIFT

(11) **EP 0 578 988 B2**
(45) Veröffentlichungstag und Bekanntmachung des Hinweises auf die Entscheidung über den Einspruch: **02.01.2003**
(45) Hinweis auf die Patenterteilung: 20.08.1997
(21) Anmeldenummer: 93109671.3
(22) Anmeldetag: 17.06.1993
(51) Int. Cl.: A01C 17/00, A01M 7/00

(54) **Vorrichtung zum Ausbringen von landwirtschaftlichem Material**
Spreader or sprayer for agricultural products
Dispositif pour épandre des matériaux en agriculture

(30) Priorität: 17.07.1992 DE 4223585
(43) Veröffentlichungstag der Anmeldung: 19.01.1994
(73) Patentinhaber: Amazonen-Werke H. Dreyer GmbH & Co. KG, 49205 Hasbergen (DE)
(72) Erfinder: Schanzenbach, Volker, W-4507 Hasbergen (DE)
(74) Vertreter: Schuster, Thomas, Dipl.-Phys.

(56) Entgegenhaltungen:
- EP-A- 0 373 034
- EP-A- 0 576 121
- WO-A-86/05353
- US-A- 5 050 771
- Zeitschrift "Top Agrar", 10/1988, Seiten 50-52

## Beschreibung

Die Erfindung betrifft eine Vorrichtung zum Ausbringen von landwirtschaftlichem Material gemäß des Oberbegriffes des Patentanspruches 1.

Eine derartige Vorrichtung ist beispielsweise durch die europäische Patentschrift 0 181 308 bekannt. Diese Vorrichtung ist als Mehrsortendüngerstreuer ausgebildet. Dieser Mehrsortendüngerstreuer weist eine Anzahl von Vorratsbehältern zum Ausbringen von verschiedenen Materialsorten auf. Diese Materialsorten werden in einstellbarer Weise Schleuderscheiben zugeführt und über der Bodenoberfläche verteilt. Weiterhin ist dieser Düngerstreuer mit einer Steuerungseinrichtung ausgerüstet, welche ein Speichermedium aufweist, in dem eine Bodenkarteneinrichtung eingespeichert ist, und mit einem Positionsgeber zum Erzeugen von Feldkoordinatensignalen zur Angabe der relativen Position des Fahrzeuges auf dem Feld bei seiner Bewegung über das Feld ausgestattet ist. Aufgrund des Zusammenwirkens des Positionsgebers mit der Bodenkarteneinrichtung, welche die Verteilung der unterschiedlichen Bodenarten auf dem zu bedüngenden Feld angibt, wird automtisch jedes Streugut in der erforderlichen Menge ausgebracht.

Der Fahrer muß jedoch noch zu Beginn der Arbeit und bei jedem Wendevorgang sowie am Feldrand ohne irgendein Hilfsmittel die Dosierorgane und die Ausbringorgane ein- und ausschalten.

Eine weitere Vorrichtung zum Ausbringen von landwirtschaftlichen Material ist durch die EP-A-03 73 034 bekannt. Diese Vorrichtung weist einen Vorratsbehälter und zumindest ein Dosierorgan, von dem aus das Material aus dem Vorratsbehälter Ausbringorganen in einstellbaren Mengen zugeführt wird und mit einer Steuerungseinrichtung, welche ein Speichermedium aufweist, in welchem die Feldrandkontur einzuspeichern ist, auf. Die Dosierorgane und die Arbeitsbreite der Vorrichtung ist entsprechend der eingegebenen Feldrandkontur, die in Form eines Winkels in das Speichermedium eingegeben wird, steuer- oder regelbar. Die Steuerungseinrichtung erhält manuell von dem Bediener ein Signal, wenn eine entsprechende Linie auf dem Feld erreicht ist, um die Dosierorgane entsprechend der Feldrandkontur zu steuern, damit eine möglichst genaue Anpassung des Ausbringens an die Feldrandform möglich ist.

Der Erfindung liegt die Aufgabe zugrunde, hier Abhilfe zu schaffen. Diese Aufgabe wird erfingundsgemäß durch die kennzeichnenden Merkmale des Anspruches 1 gelöst. Infolge dieser Maßnahme wird erstmals der Positionsgeber dazu benutzt, die Dosierorgane entsprechend zu steuern und/oder die Dosierorgane am Feldanfang, Feldende ein- und auszuschalten.

In einer Weiterbildung der Erfindung ist vorgesehen, daß die Dosierorgane automatisch entsprechend der Form des Feldes regelbar sind. Hierdurch werden auf einfachste Weise die Düngermittel in einer möglichst exakten Weise, ohne schädliche Überdüngung auf dem Acker bis an den Feldrand exakt ausgebracht.

In einer anderen Ausbildung der Erfindung können die in Anspruch 3 vorgesehenen Maßnahmen verwirklicht werden, wobei dann von Hand entsprechend der Abbildung auf dem Bildschirm oder Display exakt das Ausbringen des Düngers steuerbar ist.

Dadurch, daß bei Erreichen des jeweiligen Feldrandes die Dosierorgane aufgrund des Positionsgebers ein- oder ausschaltbar sind, wird sichergestellt, daß zum jeweils optimalen Zeitpunkt auf dem Acker die Dosierorgane ein- oder ausgeschaltet werden.

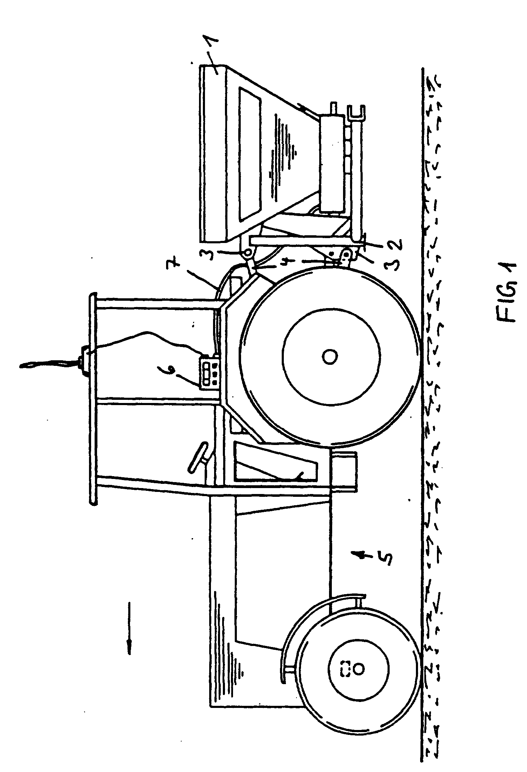

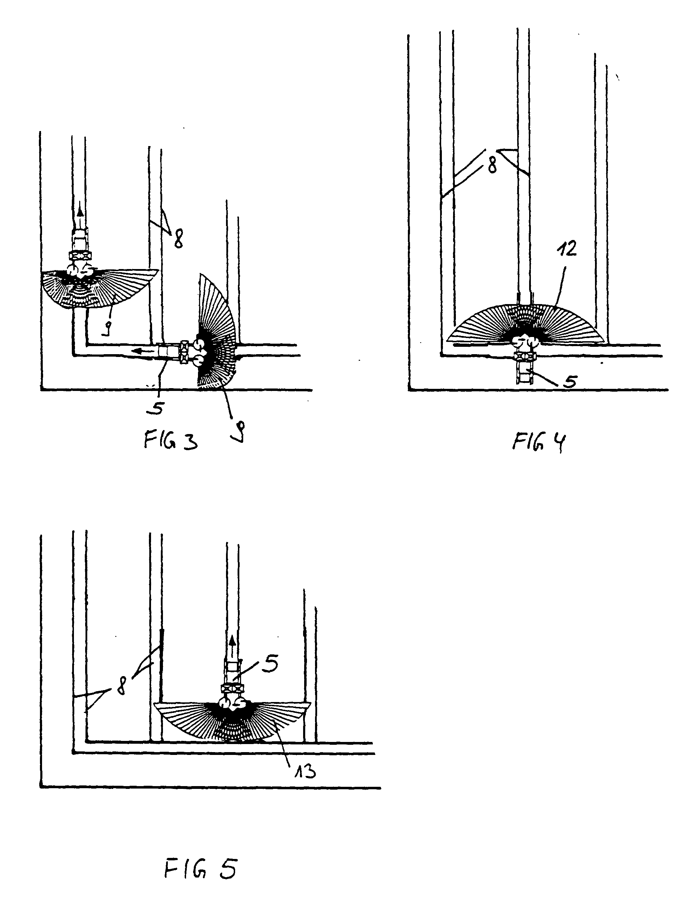

Weitere Einzelheiten der Erfindung sind der Beispielsbeschreibung und den Zeichnungen zu entnehmen. Hierbei zeigen
- Fig. 1: ein an einen Ackerschlepper angebauter Schleuderdüngerstreuer in der Seitenansicht,
- Fig. 2: chematische Darstellung des Abstreuens eines Feldes, mit Angabe der Ein- und Ausschaltung der Dosierorgan eines Zweischeibendüngerstreuers, symbolisiert durch die Streufächerumrisse,
- Fig. 3: die chematische Darstellung des Grenzstreuens in einem Teilbereich des Ackers,
- Fig. 4: die chematische Darstellung des Abstreuens der ersten Spur und die Angabe der Position zur Abschaltung der Dosierorgane bei Erreichen des Feldendes und
- Fig. 5: die chematische Darstellung und Angabe der Position für die Einschaltung der Dosierorgane am Feldanfang.

Die Erfindung wird beispielhaft am Einsatzfall eines Zentrifugaldüngerstreuers erläutert. Selbstverständlich läßt sich das erfindungsgemäße Ein- und Ausschalten der Arbeitsorgane, wie Dosierorgane, auch bei anderen landwirtschaftlichen Maschinen, beispielsweise bei einer Feldspritze oder einer Sämaschine etc. einfach anwenden.

Die als Zweischeibendüngerstreuer ausgebildete Vorrichtung zum Ausbringen von landwirtschaftlichen Material, hier Düngemittel, weist den Vorratsbehälter 1, den Rahmen 2 und die Dreipunktkupplungselemente 3 auf. Über die Dreipunktkupplungselemente 3 ist der Schleuderdüngerstreuer an den Dreipunktkraftheber 4 des Ackerschleppers 5 angeordnet. Der Vorratsbehälter 1 ist in bekannter und daher nicht näher dargestellter Weise durch ein dachförmiges Mittelteil in zwei Trichterspitzen unterteilt. Am unteren Ende der Trichterspitzen befindet sich jeweils ein Dosierorgan, welche unabhängig voneinander über die auf dem Ackerschlepper angeordnete Steuereinrichtung 6 ein- und auszuschalten bzw. so zu regeln sind, daß die einstellbaren Mengen des auszubringenden Düngers wunschgemäß eingestellt werden kann. Die Bedienungselemente der Dosierorgane sind über ein Kabel 7 mit der Steuereinrichtung verbunden. Die Steuerungseinrichtung 6 weist ein Speichermedium auf, in welchem eine Bodenkarteneinrichtung eingespeichert ist. Weiterhin besitzt die Steuerungseinrichtung 6 einen Positionsgeber zum Erzeugen von Feldkoordinatensignalen zur Angabe der relativen Position des Fahrzeuges auf dem Feld bei seiner Bewegung. Dieser Positionsgeber kann beispielsweise auf dem GPS-System (Global Positioning System) aufgebaut sein.

Die Steuerungseinrichtung 6 ist so ausgestattet, daß die Dosierorgane und/oder die Arbeitsbreite des Schleuderdüngerstreuers entsprechend der Form des Feldes regelbar sind. Dieses kann automatisch oder von Hand anhand der auf einem Bildschirm oder Display abgebildeten Feldkontur und der darauf abgebildete Position des Düngerstreuers erfolgen.

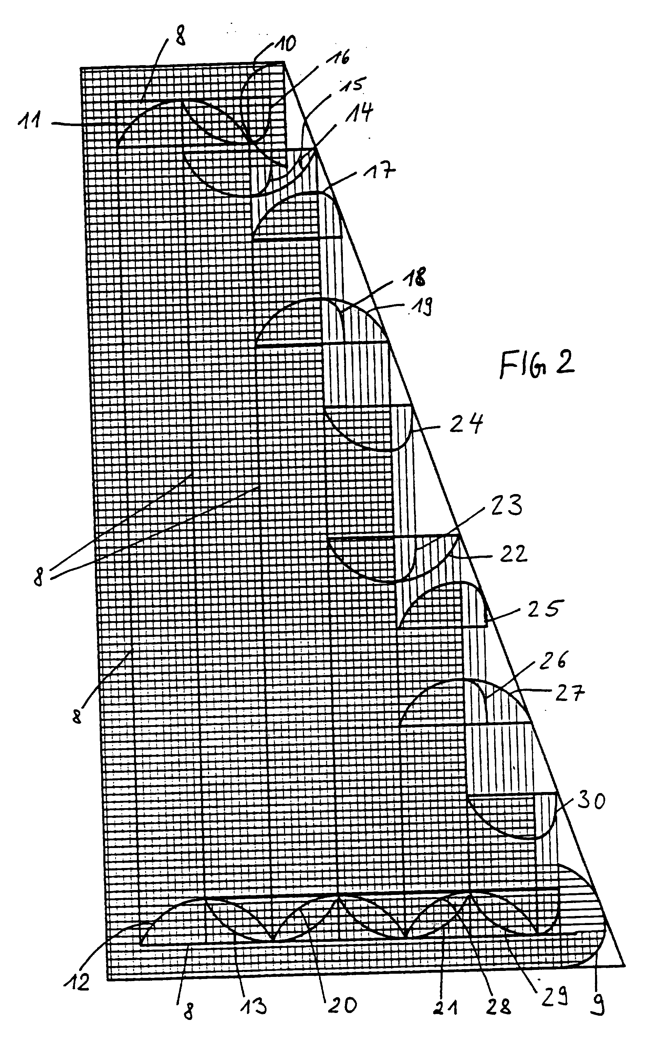

Anhand der Figuren 2-5 wird im einzelnen das Einund Ausschalten der Dosierorgane an bestimmten Positionen des Feldes näher erläutert.

In dem Speichermedium der Steuerungseinrichtung 6 ist die Feldkontur, die Größe und Länge des Feldes, wie es beispielhaft in Fig. 2 abgebildet ist, eingespeichert. Weiterhin sind, wenn auf dem Feld Fahrgassen 8 angelegt worden sind, die Lage und Länge der Fahrgassen 8 in dem Speichermedium abgespeichert. Weiterhin sind in dem Speichermedium der Steuerungseinrichtung 6 die Arbeitsbreite und Verteilcharakteristik einer Verteilmaschine eingespeichert. In dem hier dargestellten beispielhaften Fall, der anhand eines Zweischeibenschleuderdüngerstreuers erläutert wird, ist die Größe und Lage des Streufächers bei der jeweils gewählten Arbeitsbreite und den vorliegenden Einsatzfall, wie Grenzstreuen, halbseitiges Streuen, beidseitiges Streuen, unsymmetrisches Streuen etc. eingespeichert, um die Dosierorgane und/oder Arbeitsbreite der Vorrichtung entsprechend der Form des Feldes regeln zu können.

Weiterhin sind in dem Speichermedium der Steuerungseinrichtung 6 die Positionen zur Einschaltung und Abschaltung der Dosierorgane der Vorrichtung auf dem Acker eingespeichert. In Verbindung mit dem Positionsgeber zur Erzeugung von Feldkoordinatensignale werden die Dosierorgane dann ein- oder ausgeschaltet.

Auf der Abbildung in Fig. 2 sind die Fahrgassen mit den dicken durchzogenen Linien 8 dargestellt, während sie in den Figuren 3-5 mit den beiden Linien 8 dargestellt sind.

Wie die Fig. 2 zeigt, wird zunächst der Feldrand im Grenzstreuverfahren abgestreut. Mit dem Streuvorgang wird an der rechten unteren Seite begonnen. Wenn der Schlepper sich an der Position befindet, in welcher der mit 9 bezeichnete Streufächer entsteht, werden die Dosierorgane automatisch von der Steuerungseinrichtung 6 eingeschaltet. Aufgrund dieser automatischen Einschaltung der Dosierorgane über die Steuerungseinrichtung 6, während der Ackerschlepper sich mit dem Schleuderdüngerstreuer bereits mit der vorgesehenen Fahrgeschwindigkeit in der Fahrgasse 8 vorwärtsbewegt, werden an der richtigen Stelle die Dosierorgane eingeschaltet, so daß der Acker von Anfang an exakt ausgestreut wird. Die Fig. 3 zeigt die Fahrt des Schlepper 5 mit dem Schleuderdüngerstreuer und dem Streufächer 9 während des Abstreuens des Feldrandstreifens in schematischer Darstellungsweise. Wenn der Schlepperfahrer die im Ausführungsbeispiel U-förmig umlaufende äußere Fahrgasse abgefahren hat, werden die Dosierorgane, wenn der Streufächer in der mit 10 bezeichneten Position befindet sich, abgeschaltet.

Anschließend wird die zweite parallel zum Feldrand liegende Fahrgasse abgestreut. Wenn der Schlepper 5 mit dem Düngerstreuer sich an der Position befindet, in welcher der mit 11 in Fig. 2 eingezeichnete Streufächer entstehen würde und entsteht, werden automatisch von der Steuerungseinrichtung 6 die Dosierorgane eingeschaltet. Wenn der Schlepperfahrer sich mit dem Schleuderdüngerstreuer an der Position befindet, in welcher der mit 12 eingezeichnete Streufächer entsteht, d. h. also am Feldende, wie Fig. 4 zeigt, werden automatisch die Dosierorgane abgeschaltet, so daß keine schädliche Überdüngung am Vorgewende entsteht. Anschließend die nächste Fahrgasse befahren. Hierbei werden die Dosierorgane an der Position eingeschaltet, in der der mit 13 bezeichnete Streufächer entsteht, wie dies auch die Fig. 5 zeigt, der an der Stelle, an welcher der mit 14 bezeichnete Streufächer entsteht einseitig abgeschaltet wird, so daß der mit 15 bezeichnete einseitige Streufächer entsteht, in dem das rechte Dosierorgan abgeschaltet wird. An der mit 16 bezeichneten Stelle, an welcher der einseitige Streufächer eingezeichnet ist, wird entsprechend der Einprogrammierung auch das linke Dosierorgan abgeschaltet. Anschließend wird die nächste Streubahn bestreut. Zunächst wird nur das der rechten Schleuderscheibe zugeordnete Dosierorgan an der Stelle, an welche der mit 17 bezeichnete Streufächer entsteht, eingeschaltet. Einseitig wird bis zu der mit 18 bezeichneten Stelle gestreut, wo dann das Dosierorgan der linken Seite zugeschaltet wird, so daß der symmetrische, mit 19 bezeichnete Streufächer entsteht. An der Stelle, wo der mit 20 bezeichnete Streufächer entsteht, werden die Dosierorgane wieder abgeschaltet. Beim Bestreuen der nächsten Bahn wird an der Stelle, an der mit 21 bezeichnete Streufächer entsteht, eingeschaltet An der Stelle, an der der mit 22 bezeichnete Streufächer entsteht wird, das rechte Dosierorgan abgeschaltet, so daß dann nur noch mit dem 23 bezeichneten Streufächer bis zu der mit 24 bezeichneten Streufächerabbildung weiter gestreut wird. Beim Bestreuen der nächsten Fahrbahn wird an der Stelle, an der der mit 25 bezeichnete Streufächer entsteht begonnen, wobei wiederum nur das der rechten Schleuderscheibe zugeordnete Dosierorgan eingeschaltet wird. Dieses einseitige Streuen wird bis zu der Stelle, an der der mit 26 eingezeichnete einseitige Streufächer entsteht fortgefahren. An dieser Stelle wird dann das linke Dosierorgan zugeschaltet, so daß dann der mit 27 bezeichnete Streufächer entsteht. An der Stelle, an welcher der mit 28 bezeichnete Streufächer entsteht, werden alle das Dosierorgane wieder abgeschaltet. Die letzte Streubahn wird im Ausführungsbeispiel nur einseitig bestreut, wobei dann das linke Dosierorgan an der Stelle eingeschaltet wird, an der mit 28 entstehende Streufächer entsteht. Das Dosierorgan wird an der Stelle dann abgeschaltet, an der der mit 30 bezeichnete Streufächer entsteht.

Durch die vorstehend beschriebene feldkonturenabhängige Steuerung der Arbeitsorgane (beispielsweise Dosierorgane) einer landwirtschaftlichen Arbeitsmaschine, wie beispielsweise Düngerstreuer, Feldspritze, Sämaschine etc., wird es erstmals möglich, an Vorgewenden und Feldkeilen die Arbeitsorgane oder Dosierorgane sowie deren Anzahl (Arbeitsbreite) im richtigen Augenblick während der Fahrt ein- und auszuschalten. Mit einer derartigen konturenabhängigen Steuerung der Arbeitsorgane wird die Verteil- und Ausbringgenauigkeit stark erhöht, denn sie ist computergesteuert aufgrund der eingespeicherten Feld- und Maschinendaten vorgegeben.

## Patentansprüche

1. Vorrichtung zum Ausbringen von landwirtschaftlichem Material, wie beispielsweise Düngemittel, Spritzmittel, etc., mit Vorratsbehälter (1) und zumindest einem Dosierorgan, von dem aus das Material aus dem Vorratsbehälter Ausbringorganen in einstellbaren Mengen zugeführt wird und mit einer Steuerungseinrichtung (6), welche ein Speichermedium aufweist, in welchem eine Bodenkarteneinrichtung eingespeichert ist, und mit einem Positionsgeber zum Erzeugen von Feldkoordinatensignalen zur Angabe der relativen Position des Fahrzeuges auf dem Feld bei seiner Bewegung über das Feld, **dadurch gekennzeichnet, daß** in dem Speichermedium die Bodenkarteneinrichtung als Form des Feldes eingespeichert ist, und daß die Dosierorgane und/oder die Arbeitsbreite der Vorrichtung entsprechend der Form des Feldes und der von dem Positionsgeber ermittelten Position der Vorrichtung regelbar sind, wobei bei Erreichen des jeweiligen Feldrandes die Dosierorgane durch den Positionsgeber ein- oder ausgeschaltet werden.

2. Vorrichtung nach Anspruch 1, **dadurch gekennzeichnet, daß** die Dosierorgane automatisch entsprechend der Form des Feldes regelbar ist.

3. Vorrichtung nach Anspruch 1, **dadurch gekennzeichnet, daß** die Vorrichtung einen Bildschirm oder ein Display aufweist, auf welchem das zu bestreuende Feld abgebildet ist, und daß entsprechend des abgebildeten Feldes in Verbindung mit der Angabe der Position der Vorrichtung auf dem Feld auf dem Display oder Bildschirm die Dosierorgane regelbar sind.

## Claims

1. Apparatus for the distribution of agricultural material such as, for example, fertilizer, spray, etc., having a hopper (1) and at least one metering member, from which the material from the hopper is supplied to distributing members in adjustable quantities, and having a control arrangement (6) which includes a memory in which a ground mapping plan is stored, and having a position giver for generating field co-ordinate signals for specifying the relative position of the vehicle on the field as it is moving over the field, **characterised in that** the ground mapping plan is stored in the memory as the shape of the field, and **in that** the metering members and/or the working width of the apparatus are adjustable depending on the shape of the field and the position of the apparatus ascertained by the position giver, the metering members being switched on or off by the position giver on reaching the respective edge of the field.

2. Apparatus according to claim 1, **characterised in that** the metering members are automatically adjustable depending on the shape of the field.

3. Apparatus according to claim 1, **characterised in that** the apparatus includes a screen or a display, on which the field to be spread is displayed, and **in that** the metering members are adjustable depending on the displayed field in conjunction with the specification of the position of the apparatus on the field on the display or screen.

## Revendications

1. Dispositif pour distribuer une matière agricole par exemple un engrais, un agent de pulvérisation etc. comprenant un réservoir (1) et au moins un organe de dosage, qui fournit la matière du réservoir à des organes d'épandage selon les quantités réglées, ainsi qu'une installation de commande (6) équipée d'une mémoire contenant la carte du terrain et un capteur de position fournissant les signaux de coordonnées dans le champ pour indiquer la position relative du véhicule dans le champ au cours de son mouvement dans le champ,
**caractérisé en ce que**
la mémoire contient la cartographie du terrain, mise en mémoire comme forme du champ, et les organes de dosage et/ou la largeur active du dispositif sont réglables en fonction de la forme du champ et de la position du dispositif fournies par le capteur de position, et lorsqu'on atteint le bord respectif du champ, les organes de dosage sont mis en oeuvre ou sont coupés par le du capteur de position.

2. Dispositif selon la revendication 1,
**caractérisé en ce que**
les organes de dosage sont réglés automatiquement suivant la forme du champ.

3. Dispositif selon la revendication 1,
**caractérisé en ce que**
le dispositif comporte un écran-image ou un moyen d'affichage, sur lequel se trouve affiché le champ à traiter et en fonction de l'image du champ en liaison avec l'indication de position du dispositif, sur le champ, on règle les organes de dosage sur le moyen d'affichage ou l'écran.
